# EUROPÄISCHE PATENTANMELDUNG

(11) **EP 0 732 184 A1**
(43) Veröffentlichungstag der Anmeldung: **18.09.1996**
(21) Anmeldenummer: 96103770.2
(22) Anmeldetag: 11.03.1996
(51) Int. Cl.: B29C 45/26, H01R 33/22, H01R 43/18

(54) **Glühlampenschraubfassung sowie Spritzgusswerkzeug und Verfahren zu ihrer Herstellung**

(30) Priorität: 15.03.1995 DE 19509319
(71) Anmelder: VLM-W. Murjahn GmbH & Co., D-40822 Mettmann (DE)
(72) Erfinder: Murjahn, Waldemar, 40822 Mettmann (DE); Murjahn, Wolfgang, 40822 Mettmann (DE); Richarz, Peter, 40822 Mettmann (DE)
(74) Vertreter: Feder, Wolf-Dietrich, Dr. Dipl.-Phys.

(57) **Zusammenfassung**

Glühlampenschraubfassung sowie Spritzgußwerkzeug und Verfahren zu ihrer Herstellung. Die Schraubfassung (1) besitzt ein Innengewinde zur Aufnahme eines Lampensockels, das durch zwei Paare von Unterbrechungen (3.1, 3.2, 4.11, 4.21) in vier Gewindeabschnitte (2.1 bis 2.4) unterteilt ist. Die Unterbrechungen der Paare liegen einander diametral gegenüber und sind um 90° gegeneinander verdreht. Das erste Paar von Unterbrechungen (3.1, 3.2) dient zur Aufnahme von Fassungskontakten, während das zweite Paar von Unterbrechungen (4.11, 4.21) einen Teilbereich der in einer Ebene durch die Fassungslängsachse verlaufenden Montagekanäle (4.1, 4.2) bildet, die zur Aufnahme von durch die Fassung hindurchgeführten Befestigungsschrauben bestimmt sind.

## Beschreibung

Die Erfindung betrifft eine Glühlampenschraubfassung mit den Merkmalen aus dem Oberbegriff des Patentanspruchs 1 sowie ein Spritzgußwerkzeug zu ihrer Herstellung mit den Merkmalen aus dem Oberbegriff des Patentanspruchs 7 und ein Verfahren zu ihrer Herstellung gemäß dem Oberbegriff des Patentanspruchs 9.

Glühlampenschraubfassungen mit den Merkmalen aus dem Oberbegriff des Patentanspruchs 1 sind bekannt. Sie können mittels der durch die Montagekanäle und den Fassungsboden geführten Befestigungsschrauben an einen Fassungsträger angeschraubt oder mit einem Fassungsdom versehen werden.

Es hat sich herausgestellt, daß bei der Herstellung von Glühlampenschraubfassungen dieser Art je nach der gewünschten Fassungsgröße Schwierigkeiten bei der Anordnung der Montagekanäle und des Innengewindes innerhalb der Fassung auftreten können.

Insbesondere sind, um elegante und kleine Leuchten zu ermöglichen, häufig die Aufnahmen, die im Leuchtenkörper für die Befestigungsschrauben vorgesehen sind, in einem Bereich angeordnet, der innerhalb der Projektion des äußeren Umfangs der Fassung in Fassungslängsrichtung liegt. Insbesondere bei Fassungen mit der Typenbezeichnung E14 ist der verfügbare Raum für die Montagekanäle sehr eingeschränkt.

Aus der EP 0 163 892B1 ist eine Glühlampenfassung bekannt, bei der diese Schwierigkeiten dadurch behoben werden sollen, daß die Montagekanäle in Bezug zur Fassungslängsachse unter einem spitzen Winkel angeordnet sind. Eine derartige Ausbildung einer Glühlampenschraubfassung bringt aber gewisse Probleme beim Aufbau und bei der Handhabung des zur Herstellung benötigten Spritzgußwerkzeugs mit sich. Außerdem hat diese Führung der Montagekanäle zur Folge, daß die Einsetzöffnung der Fassung für die Glühlampe eine im wesentlichen ovale Form erhält. Diese Form hat zum einen den Nachteil, daß ein Außengewinde, wie es üblicherweise an Fassungen zur Anbringung von Schirmträgerringen und dergleichen vorgesehen ist, nicht ohne weiteres anbringbar ist. Zum anderen ist der Berührungsschutz beim Einsetzen der Glühlampe möglicherweise beeinträchtigt, falls der Glühlampensockel in einer Stellung, in der er erst gerade mit einem der Fassungskontakte in Berührung kommt, noch durch einen der Montagekanäle hindurch berührbar wäre.

Der Erfindung liegt die Aufgabe zugrunde, eine Glühlampenschraubfassung mit den im Oberbegriff des Patentanspruchs 1 angegebenen Merkmalen zu schaffen, die für alle Fassungsgrößen verwendbar ist, ohne daß Probleme hinsichtlich der Anordnung der Montagekanäle und des Innengewindes auftreten und bei der auch die Herstellung und Handhabung des Spritzgußwerkzeugs keine Probleme bereitet. Darüberhinaus soll die Anbringung eines Außengewindes nicht beeinträchtigt und ein ausreichender Berührungsschutz sichergestellt werden.

Die Lösung dieser Aufgabe erfolgt erfindungsgemäß mit den Merkmalen aus dem kennzeichnenden Teil des Patentanspruchs 1. Eine besonders vorteilhafte Ausführungsform der Erfindung ist in Patentanspruch 2 beschrieben. Weitere Ausführungsformen sind Gegenstand der Ansprüche 3 bis 6.

Die Ausführungsform nach Anspruch 2 eröffnet insbesondere die Möglichkeit gemäß der weiteren Erfindung ein Spritzgußwerkzeug zur Herstellung der erfindungsgemäßen Glühlampenschraubfassung zu schaffen, das die Merkmale aus dem kennzeichnenden Teil des Patentanspruchs 7 aufweist. Eine vorteilhafte Weiterbildung dieses Spritzgußwerkzeuges ist in Patentanspruch 8 beschrieben. Ein Verfahren zur Herstellung der erfindungsgemäßen Glühlampenschraubfassung mittels des erfindungsgemäßen Spritzgußwerkzeuges ist in Patentanspruch 9 beschrieben. Die bewußte Inkaufnahme einer insgesamt vierfachen Unterbrechung des Innengewindes der Glühlampenschraubfassung eröffnet nicht nur die Möglichkeit Probleme bei der Anordnung der Montagekanäle und des Innengewindes sowie bei der Erstellung und der Handhabung des Spritzgußwerkzeuges zu vermeiden, sondern erlaubt auch eine derartige Ausgestaltung des Spritzgußwerkzeuges, daß der Entformungsvorgang wesentlich schneller durchgeführt werden kann. Es ist bekannt, zur Herstellung von Glühlampenschraubfassungen Spritzgußwerkzeuge zu verwenden, bei denen die Werkzeugteile zur Bildung des Gewindes oder von Gewindeabschnitten an einem Einsatzteil angeordnet sind. Dieses Einsatzteil muß vor dem endgültigen Entformen aus dem Werkzeug herausgeschraubt werden, was eine Drehung des Einsatzteils um ein Vielfaches von 360° erfordert und somit zeitaufwendig ist. Bei dem erfindungsgemäßen Spritzgußwerkzeug zur Herstellung der erfindungsgemäßen Glühlampenschraubfassung braucht das Einsatzteil lediglich um einen Winkelbetrag von 45° gedreht zu werden und dann kann sogleich der Entformungsvorgang durchgeführt werden. Dies bedingt bei der Serienherstellung einen beträchtlichen Zeitgewinn bei der Entformung.

Im folgenden werden anhand der beigefügten Zeichnungen je ein Ausführungsbeispiel für eine Glühlampenschraubfassung nach der Erfindung und ein Ausführungsbeispiel für ein Spritzgußwerkzeug zur Herstellung einer solchen Glühlampenschraubfassung beschrieben.

In den Zeichnungen zeigen:
Fig. 1 eine Glühlampenschraubfassung in Seitenansicht;
Fig. 2 die Glühlampenschraubfassung nach Fig. 1 in einer Teilaufsicht auf den Fassungsboden;
Fig. 3 die Glühlampenschraubfassung nach Fig. 1 in einer Aufsicht auf die Fassungsöffnung;
Fig. 4 die Glühlampenschraubfassung nach Fig. 1 in einem durch die Fassungslängsachse laufenden Schnitt;
Fig. 5 den Schnitt nach Fig. 4 in einer perspektivischen Darstellung;
Fig. 6 die Glühlampenschraubfassung nach Fig. 1 in einer perspektivischen Darstellung der Seitenansicht;
Fig. 7 die Glühlampenschraubfassung nach Fig. 1 in einer perspektivischen Ansicht auf die Fassungsöffnung;
in Fig. 8 das Innenteil eines Spritzgußwerkzeuges zur Herstellung einer Glühlampenschraubfassung nach den Fig. 1 bis 7 in einer Ansicht auf die Stirnseite des Innenteils entsprechend Fig. 3 der Darstellung der Fassung;
Fig. 9 das Spritzgußwerkzeug nach Fig. 8 in einer Ansicht in Richtung des Pfeils IX in Fig. 8;
Fig. 10 das Spritzgußwerkzeug nach Fig. 8 in einer Ansicht in Richtung des Pfeils X in Fig. 8;
Fig. 11 einen Schnitt nach der Linie A-B in Fig. 10.

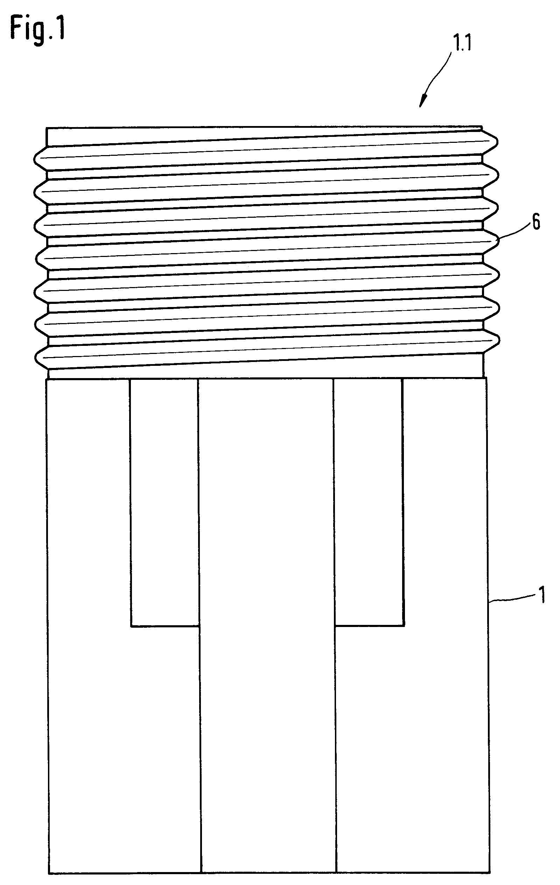

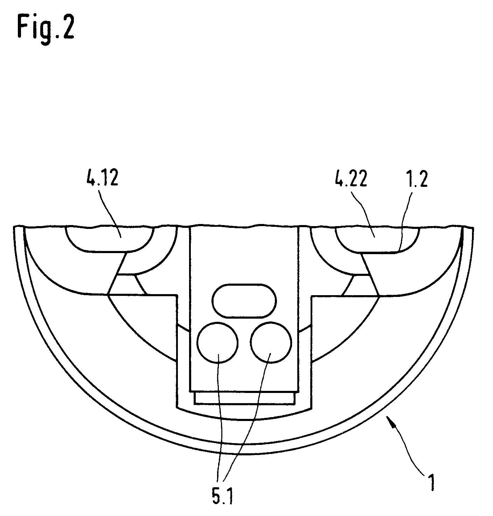

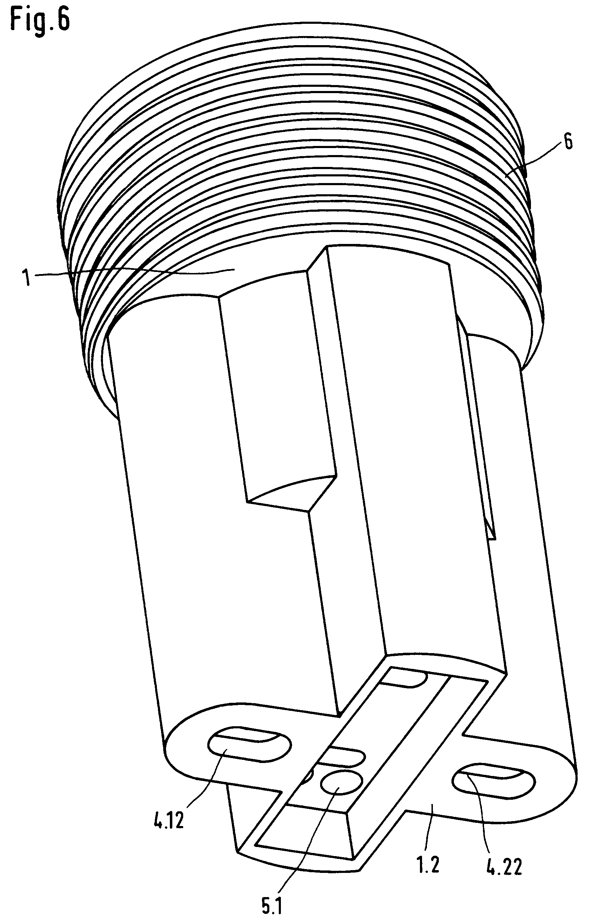

Die in den Fig. 1 bis 7 dargestellte Glühlampenschraubfassung besitzt einen Fassungskörper 1, an dessen vorderem, der Fassungsöffnung 1.1 zugewandten Abschnitt ein Außengewinde 6 angeordnet ist. Im Fassungskörper 1 ist ein Innengewinde zur Aufnahme eines nicht dargestellten Lampensockels angeordnet, das aus insgesamt vier Gewindeabschnitten 2.1, 2.2, 2.3, 2.4 besteht, zwischen denen jeweils ein erstes Paar von einander diametral gegenüberliegenden, in Fassungslängsrichtung verlaufenden Unterbrechungen 3.1 und 3.2 sowie ein zweites Paar von einander diametral gegenüberliegenden, in Fassungslängsrichtung verlaufenden Unterbrechungen 4.1 und 4.2 angeordnet sind. Das erste Paar der Unterbrechungen 3.1 und 3.2 dient zur Aufnahme nicht dargestellter Fassungskontakte, die in den Bereich innerhalb des Innengewindes führen und durch Öffnungen 5.1 und 5.2 im Fassungsboden 1.2 mit ebenfalls nicht dargestellten elektrischen Anschlüssen verbunden sind. Das zweite Paar von Unterbrechungen 4.1 und 4.2 besteht in Montagekanälen, die parallel zur Fassungslängsachse FL verlaufen und zur Aufnahme von nicht dargestellten Befestigungsschrauben bestimmt sind, deren Schäfte über Öffnungen 4.12 und 4.22 durch den Fassungsboden 1.2 führbar sind.

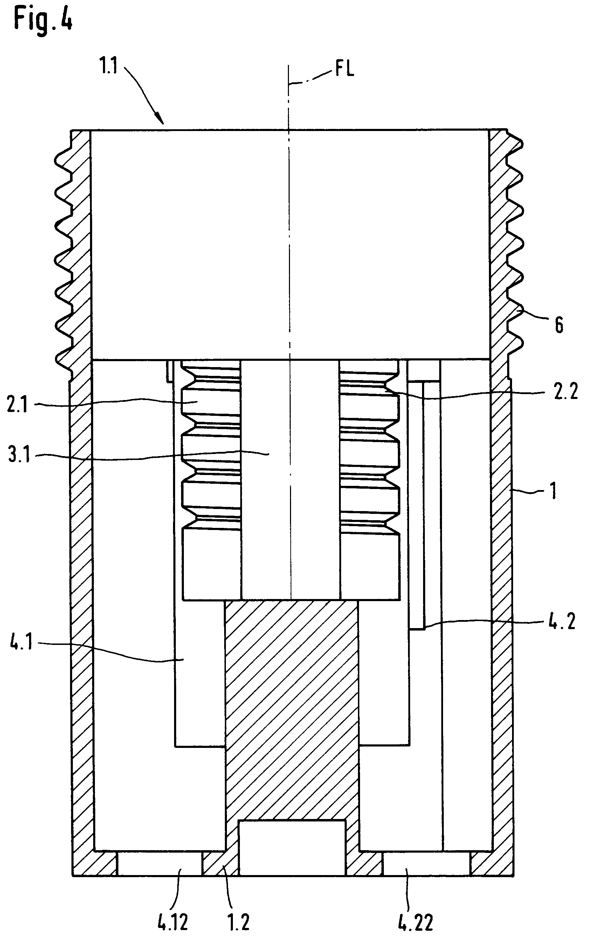

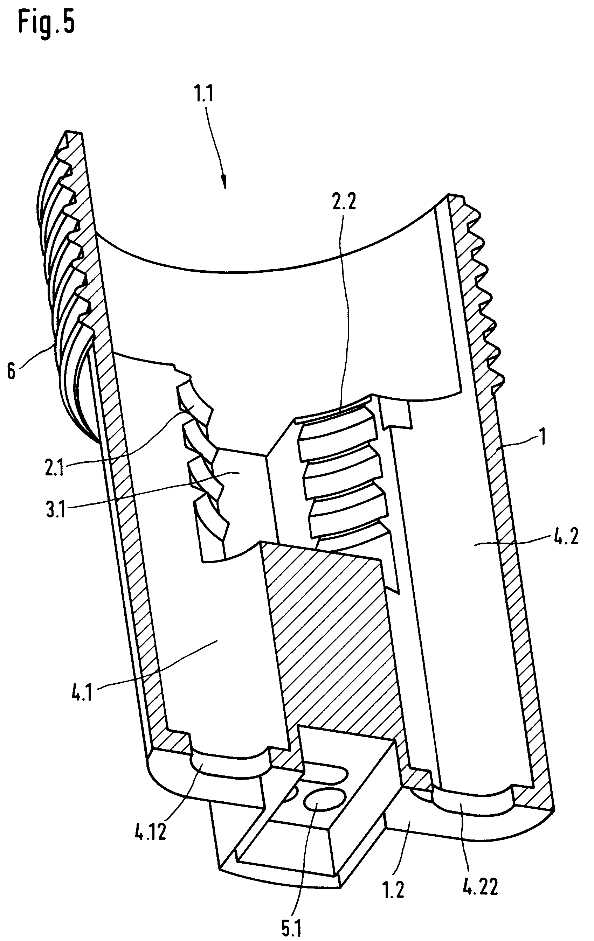

Wie aus den Fig. 4 und 5 besonders gut zu erkennen, sind die Montagekanäle 4.1 und 4.2 vollständig innerhalb des Außengewindes 6 angeordnet, so daß das Außengewinde 6 durch die Montagekanäle nicht unterbrochen wird. Weiterhin sind die Montagekanäle über ihre ganze Länge gegenüber der Außenseite der Fassung geschlossen und, im Bereich von der Fassungsöffnung 1.1 her gesehen, hinter dem Innengewinde 2.1 bis 2.4 gegenüber den die Fassungskontakte aufnehmenden Unterbrechungen 3.1 und 3.2 geschlossen, so daß die Isolierung der Befestigungsschrauben von den Fassungskontakten sichergestellt ist.

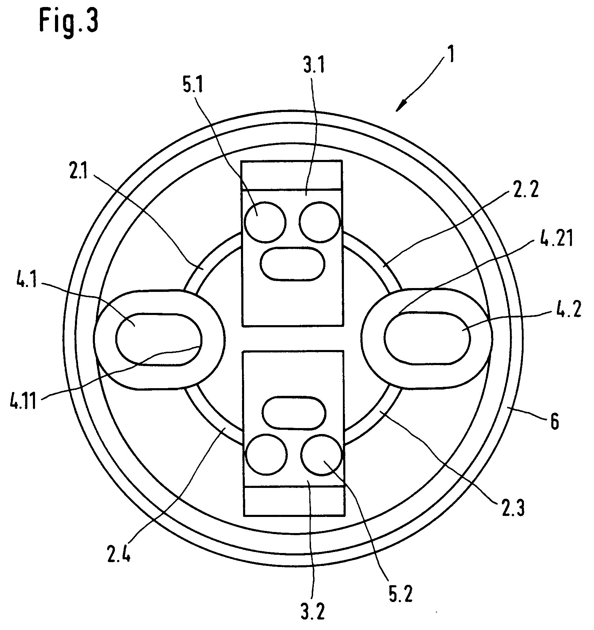

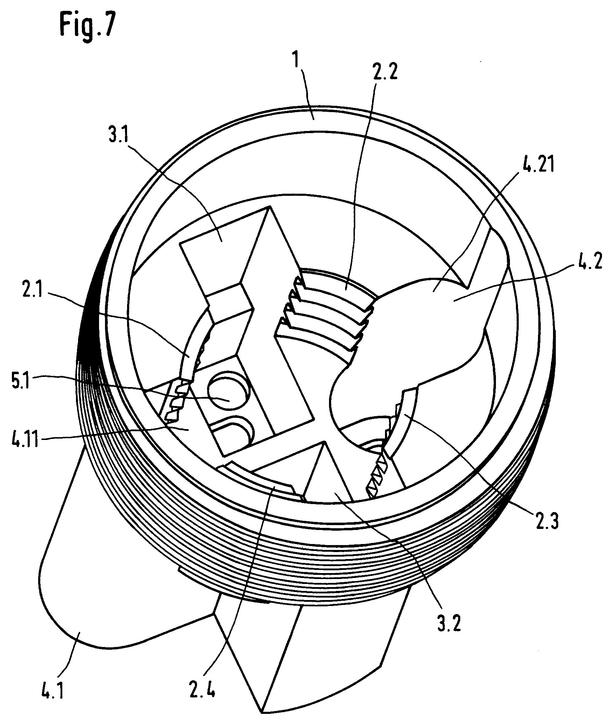

Wie beispielsweise Fig. 3 gut zu entnehmen, ist das Paar der Montagekanäle 4.1 und 4.2 gegenüber dem ersten Paar von Unterbrechungen 3.1, 3.2 um 90° in Umfangsrichtung verdreht angeordnet. Die Unterbrechungen des Innengewindes 2.1 bis 2.4 durch das zweite Paar werden von Teilbereichen 4.11 bzw. 4.21 der Montagekanäle 4.1 und 4.2 gebildet. Dies ist den perspektivischen Darstellungen gemäß den Fig. 5 und 7 besonders deutlich zu entnehmen.

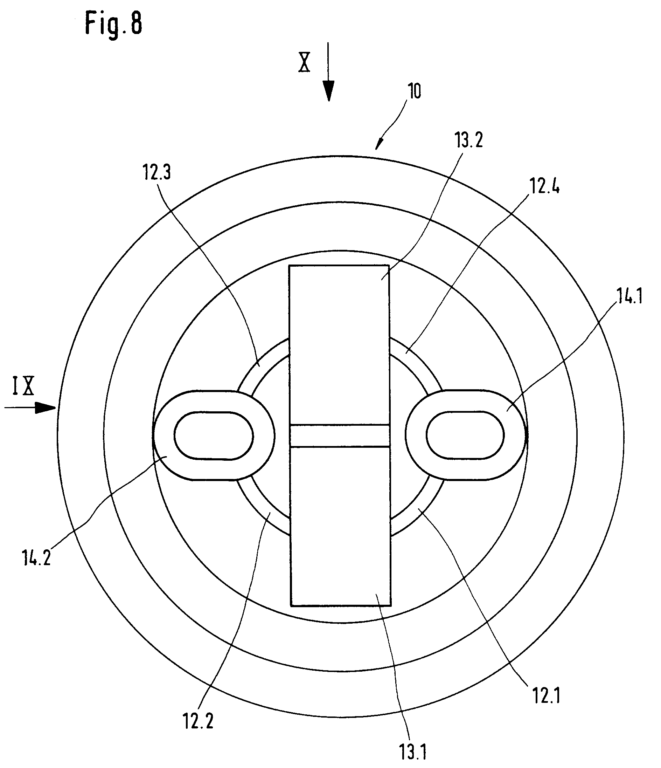

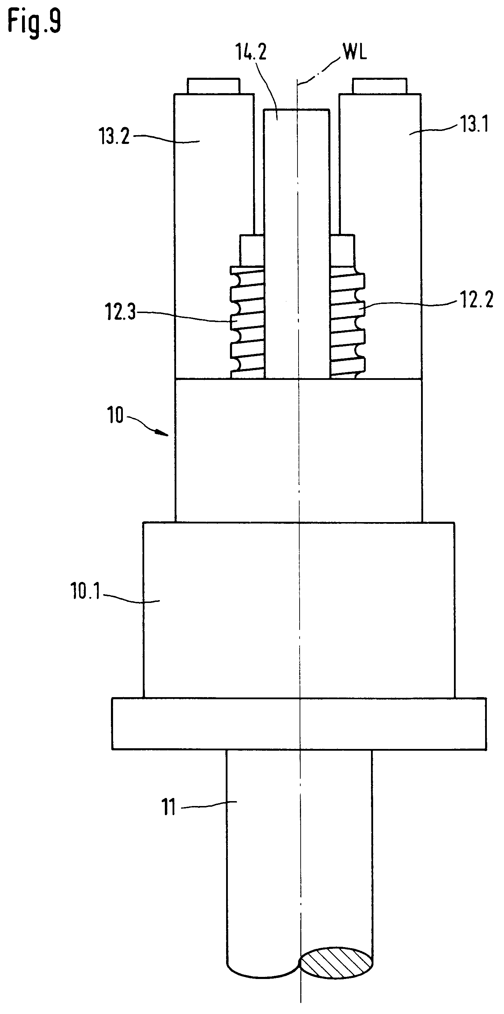

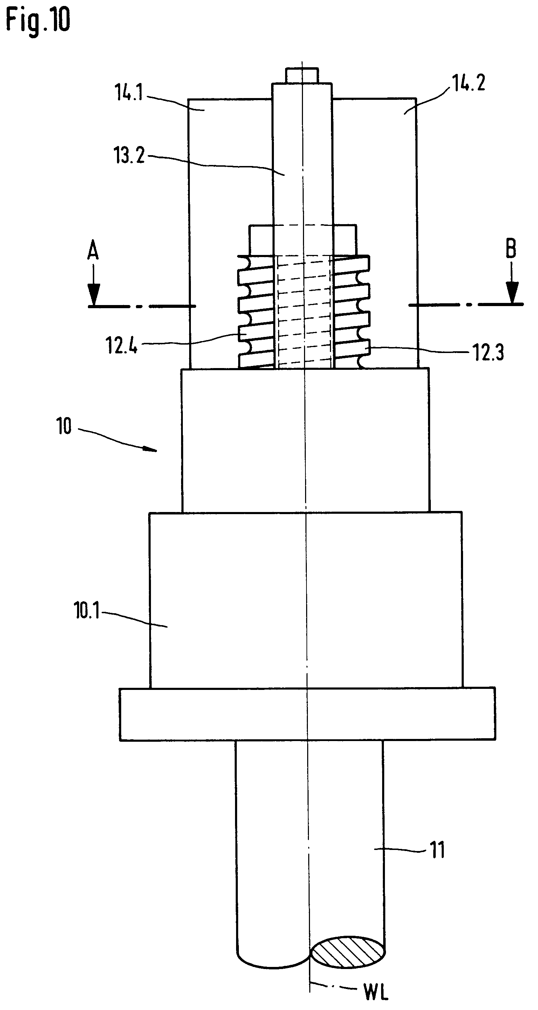

In den Fig. 8 bis 11 ist das Innenteil 10 eines Spritzgußwerkzeuges zur Herstellung einer Glühlampenschraubfassung nach den Fig. 1 bis 7 dargestellt. Dieses Innenteil 10 besitzt einen Grundkörper mit Boden 10.1, in den ein Einsatzteil 11 drehbar eingesetzt ist. Das Innenteil 10 des Spritzgußwerkzeuges bestimmt im wesentlichen die Innenkonturen der herzustellenden Glühlampenschraubfassung, während das nicht dargestellte Außenteil, das beim Formungsvorgang das Innenteil 10 umgibt, im wesentlichen die Außenkonturen bestimmt.

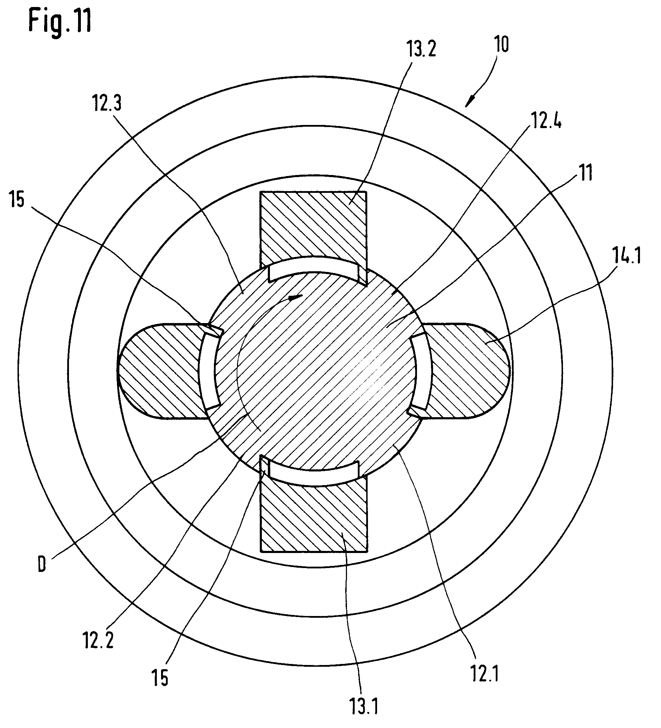

Am Grundkörper 10.1 des Innenteils 10 sind fest Werkzeugteile 13.1 und 13.2 zur Bildung der Unterbrechungen 3.1 und 3.2 der Fassung sowie Werkzeugteile 14.1 und 14.2 zur Bildung der Unterbrechungen 4.1 und 4.2 mit den Montagekanälen angeordnet. Am drehbaren Einsatzteil 11 sind Werkzeugteile 12.1, 12.2, 12.3 und 12.4 zur Bildung der Gewindeabschnitte 2.1, 2.2, 2.3 und 2.4 der Fassung angeordnet. Wie aus Fig. 11 besonders gut zu entnehmen, erstrecken sich die Werkzeugteile 12.1, 12.2, 12.3 und 12.4 mit ihren formenden Oberflächen in Umfangsrichtung über einen Winkelabschnitt,der kleiner ist als der Winkelabschnitt, über den sich die festangeordneten Werkzeugteile 13.1, 13.2 und 14.1, 14.2 erstrecken. Entsprechend erstrecken sich am Innengewinde der Fassung die Gewindeabschnitte 2.1, 2.2, 2.3 und 2.4 über einen Umfangswinkel von weniger als 45°, während sich die Unterbrechungen 3.1, 3.2 und 4.1, 4.2 über einen Umfangswinkel von mehr als 45° erstrecken. In Fig. 11 ist das Spritzwerkzeug in der Arbeitsstellung dargestellt, in der sich die formenden Oberflächen der die Gewindeabschnitte bildenden Werkzeugteile 12.1 bis 12.4 in Umfangsrichtung jeweils an die Werkzeugteile 13.1, 13.2 und 14.1, 14.2 anschließen, die die Unterbrechungen ausformen. An der Innenseite dieser Werkzeugteile 13.1, 13.2 sowie 14.1, 14.2 sind Anschläge 15 angeordnet. Zur Entformung nach dem Spritzgußvorgang und dem Aushärten des Kunststoffmaterials wird das Einsatzteil 11 in Pfeilrichtung D (Fig. 11) verdreht, bis die Werkzeugteile 12.1 bis 12.4 an den Anschlägen 15 anliegen. In dieser Stellung liegen die Werkzeugteile 12.1 bis 12.4 radial vollständig innerhalb der Werkzeugteile 13.1, 13.2 und 14.1, 14.2, so daß das Innenteil 10 aus dem Außenteil herausgezogen werden kann ohne daß eine Behinderung an den die Gewindeabschnitte formenden Oberflächen der Werkzeugteile 12.1 bis 12.4 auftritt. Ein vollständiges Herausschrauben des Einsatzteils 11 ist nicht erforderlich.

## Patentansprüche

1. Glühlampenschraubfassung aus Isolierstoff mit einem Innengewinde zur Aufnahme eines Lampensockels und in den Bereich innerhalb des Innengewindes führenden, mit elektrischen Anschlüssen verbundenen Fassungskontakten, die zum Teil in einem ersten Paar voneinander diametral gegenüberliegenden, in Fassungslängsrichtung verlaufenden und das Innengewinde in Gewindeabschnitte unterteilenden Unterbrechungen angeordnet sind, sowie mit zwei in einer Ebene durch die Fassungslängsachse verlaufenden Montagekanälen für zwei durch den Fassungsboden geführte Befestigungsschrauben, dadurch gekennzeichnet, daß das Innengewinde durch ein zweites Paar voneinander diametral gegenüberliegenden, in Fassungslängsrichtung verlaufenden Unterbrechungen (4.11, 4.21) in insgesamt vier Gewindeabschnitte (2.1, 2.2, 2.3, 2.4) unterteilt ist, wobei das zweite Paar von Unterbrechungen (4.11, 4.21) gegenüber dem ersten Paar (3.1, 3.2) um im wesentlichen 90° verdreht angeordnet ist und zur Aufnahme von Teilbereichen der Montagekanäle (4.1, 4.2) dient.

2. Glühlampenschraubfassung nach Anspruch 1, dadurch gekennzeichnet, daß sich jeder Gewindeabschnitt (2.1 bis 2.4) über einen Umfangswinkel von < 45° und jede Unterbrechung (3.1, 3.2, 4.11, 4.21) sich über einen Umfangswinkel > 45° erstreckt.

3. Glühlampenschraubfassung nach Anspruch 1 oder 2, dadurch gekennzeichnet, daß die Montagekanäle (4.1, 4.2) parallel zur Fassungslängsachse (FL) verlaufen.

4. Glühlampenschraubfassung nach Anspruch 3, dadurch gekennzeichnet, daß sie zumindest auf einem Teilbereich ihrer Länge mit einem Außengewinde (6) versehen ist.

5. Glühlampenschraubfassung nach Anspruch 4, dadurch gekennzeichnet, daß die Montagekanäle (4.1, 4.2) vollständig innerhalb des Außengewindes (6) angeordnet sind derart, daß das Außengewinde (6) durch die Montagekanäle (4.1, 4.2) nicht unterbrochen wird.

6. Glühlampenschraubfassung nach einem der Ansprüche 1 bis 5, dadurch gekennzeichnet, daß die Montagekanäle (4.1, 4.2) über ihre ganze Lange gegenüber der Außenseite der Fassung geschlossen sind und daß sie in einem Bereich hinter dem Innengewinde (2.1 bis 2.4) nach innen gegenüber den Fassungskontakten geschlossen sind, so daß die Isolierung der Schraubenköpfe der Befestigungsschrauben von den Fassungskontakten sichergestellt ist.

7. Spritzgußwerkzeug zur Herstellung einer Glühlampenschraubfassung nach Anspruch 2 und gegebenenfalls einem der Ansprüche 3-6 aus spritzbarem Kunststoffmaterial mit einem die Außenkonturen der Fassung bestimmenden Außenteil und einem die Innenkonturen der Fassung bestimmenden Innenteil, das erste Werkzeugteile zur Bildung von Gewindeabschnitten sowie zweite Werkzeugteile zur Bildung von Unterbrechungen aufweist, wobei die ersten Werkzeugteile zur Bildung von Gewindeabschnitten an einem um die Werkzeuglängsachse verdrehbaren Einsatzteil angeordnet sind, dadurch gekennzeichnet, daß die am Einsatzteil (11) angeordneten, die Gewindeabschnitte bildenden ersten Werkzeugteile (12.1, 12.2, 12.3, 12.4) sich in Umfangsrichtung jeweils über einen Winkelabschnitt erstrecken, der kleiner ist als der Winkelabschnitt über den sich die am Innenteil (10) fest angeordneten, die Unterbrechung bildenden zweiten Werkzeugteile (13.1, 13.2, 14.1, 14.2) erstrecken, und das Einsatzteil (11) zum Entformen um einen vorgegebenen Winkelbetrag von im wesentlichen 45° aus einer Stellung in der jeweils die ersten Werkzeugteile (12.1 bis 12.4) in Umfangsrichtung an die zweiten Werkzeugteile (13.1, 13.2, 14.1, 14.2) anschließen, in eine Stellung verdrehbar ist, in der die ersten Werkzeugteile (12.1 bis 12.4) an der Innenseite der zweiten Werkzeugteile (13.1, 13.2, 14.1, 14.2) und diesen vollständig radial gegenüberliegen.

8. Spritzgußwerkzeug nach Anspruch 7, dadurch gekennzeichnet, daß an den zweiten Werkzeugteilen (13.1, 13.2, 14.1, 14.2) Anschläge (15) zur Begrenzung des Drehwinkels der ersten Werkzeugteile (12.1 bis 12.4) angeordnet sind.

9. Verfahren zur Herstellung einer Glühlampenschraubfassung nach Anspruch 2 und gegebenenfalls einem der Ansprüche 3-6 mittels eines Spritzgußwerkzeuges nach Anspruch 7 oder 8, dadurch gekennzeichnet, daß zur Entformung nach dem Spritzgußvorgang und dem Aushärten des Kunststoffmaterials das Einsatzteil (11) um einen vorgegebenen Winkel von im wesentlichen 45° verdreht und dann der Entformungsvorgang durchgeführt wird.
